# EUROPÄISCHE PATENTSCHRIFT

(11) **EP 3 300 558 B1**
(45) Veröffentlichungstag und Bekanntmachung des Hinweises auf die Patenterteilung: **27.11.2019**
(21) Anmeldenummer: 17192875.7
(22) Anmeldetag: 25.09.2017
(51) Int. Cl.: A01B 63/111, A01B 63/112, A01B 69/00

(54) **VORRICHTUNG UND VERFAHREN ZUR REGELUNG DES BETRIEBS EINES HYDRAULISCH BETÄTIGBAREN ANBAUGERÄTS AN EINEM FAHRZEUG**
DEVICE AND METHOD FOR GOVERNING THE OPERATION OF A HYDRAULICALLY ACTUATED TOWING DEVICE ON A VEHICLE
DISPOSITIF ET PROCÉDÉ DE RÉGLAGE DU FONCTIONNEMENT D'UN APPAREIL ISOLÉ HYDRAULIQUE D'UN VÉHICULE

(30) Priorität: 29.09.2016 DE 102016218805
(43) Veröffentlichungstag der Anmeldung: 04.04.2018
(73) Patentinhaber: Robert Bosch GmbH, 70442 Stuttgart (DE)
(72) Erfinder: Schleyer, Markus, 71640 Ludwigsburg (DE); Fassnacht, Jochen, 75365 Calw (DE); Rose, Steffen, 71638 Ludwigsburg (DE); Michalke, Gabriele, 71263 Weil Der Stadt (DE)
(74) Vertreter: Thürer, Andreas

(56) Entgegenhaltungen:
- EP-A1- 1 238 577
- EP-A1- 3 178 302
- EP-A2- 1 862 050
- WO-A1-2016/076289
- JP-A- H04 183 301

## Beschreibung

Die vorliegende Erfindung betrifft eine Vorrichtung für ein Fahrzeug, insbesondere einen Traktor mit einer hydraulischen Betätigungseinheit zur Regelung des Betriebs eines Anbaugeräts an dem Fahrzeug, sowie ein hierfür geeignetes Betriebsverfahren. Insbesondere findet die Erfindung Anwendung bei einem Traktor, einem landwirtschaftlichen Ackerschlepper, einer mobilen Arbeitsmaschine zur Feldbearbeitung oder dergleichen. Traktoren bzw. Ackerschlepper werden als universell einsetzbare Arbeitsmaschinen vorrangig in der Landwirtschaft zur Bearbeitung von Ackerböden eingesetzt.

Das Pflügen stellt einen wichtigen Arbeitsgang in der landwirtschaftlichen Bodenbearbeitung dar. Ziel dabei ist, ein möglichst gleichmäßiges Pflugbild zu erreichen. Das bedeutet eine einheitliche Breite und Tiefe der Furchen, die von den einzelnen Pflugscharen hinterlassen werden und zwar unabhängig von etwaigen Änderungen in der Bodentopologie.

Das Pflügen stellt hohe Anforderungen an den Antriebsstrang des Traktors und die Regelgüte einer elektronisch-hydraulischen Hubwerksregelung, denn nur mit einem abgestimmten Betrieb können die Pflügearbeiten schnell und effizient durchgeführt werden. Vor allem bei stark inhomogenen und sehr feuchten Böden besteht aufgrund einer sehr hohen Widerstandskraft am Pflug die Möglichkeit, dass der Traktor steckenbleibt und/oder der Motor abgewürgt wird. Zusätzlich zu einer Lageregelung des Pflugs kann eine Zugkraftregelung vorgesehen sein, die ein Abwürgen des Motors dadurch zu verhindern versucht, dass die Zugkraft am traktorseitigen Gelenk des Unterlenkers gemessen und diese bzw. deren Gradient auf einen Wert geregelt wird, welcher ein Abwürgen des Motors verhindert bzw. eine Reduzierung des Schlupfs der Antriebsräder bewirkt. Dies geschieht insbesondere durch (kurzzeitiges) Anheben des Pflugs und der daraus resultierenden Verringerung der Widerstandskraft des Pflugs. Zudem verbessert sich bei sehr inhomogenen Böden das Resultat des Pflugprozesses, da der Pflug in sehr dichten Bodenbereichen seine Pflugtiefe verringern würde. Bei sehr welligen und unebenen Böden verbessert sich ebenso das Pflugbild und der Komfort wird erhöht, da sich die Pflugtiefe über die variierende Zugkraft dem Bodenprofil besser anpasst, als wenn Lage bzw. Tiefe des Pflugs geregelt werden würde.

Um die Lage des Pflugs zu regeln, ist es bekannt, die Lage des Hubwerks und damit die Lage des Pflugs allein durch Variation der Höhe des Anbaugeräts während des Pflügens als Regelgröße heranzuziehen. Der Lagesensor, der von einer Kurvenscheibe im Hubwerk betätigt wird, liefert den Ist-Wert. Ein zusätzlicher der Lageregelung überlagerter Zugkraftregelkreis sieht für die Ermittlung der Zugkraft zwei Kraftmessbolzen vor, die in das Gelenk des Unterlenkers eingebaut sind. Diese Kraftmessbolzen können die gesamte Widerstands- bzw. Pflugkraft aller am Pflugprozess beteiligten Pflugschare messen. Hierbei können zwar Unebenheiten im Bodenverlauf (z. B. Hügel, Bodenwellen, Querfurchen) erkannt und diese aufgrund des sich ändernden Kraftverlaufs kompensiert werden. Für ein gleichmäßiges Pflugbild reicht dies in der Regel jedoch nicht aus, da die Neigung des Pflugs bzw. des Anbaugeräts nicht variiert und sich somit auch nicht an die Änderung des Bodenprofils anpassen kann. Als Lagesensor ist in der EP-A-3 178 302 eine Kamera vorgeschlagen worden. Um die Lage des Pflugs im Raum und somit auch seine Tiefe bzw. Höhe (Höhenlage) ermitteln zu können, ist die Kamera hin auf mindestens eine Lageerfassungsmarkierung gerichtet, die im Betrieb oberhalb auf einem Träger des Schleppgeräts angeordnet sind. Das Erfassen der Höhenlage des Pflugs umfasst keine Information über den Winkel des Pflugs zur Bodenoberfläche, so dass eine Einstellung der Neigung nicht möglich ist.

Im Zusammenhang mit dem Ankoppeln von Schleppgeräten an ein Fahrzeug ist bekannt, die Anspannschnittstelle am Arbeitsfahrzeug bei der Bewegung hin zu einer entfernten und abgetrennten Anspannschnittstelle der Landmaschine automatisch auszurichten. Für diesen Ausrichtprozess bzw. die Anfahrt kann eine Bilderfassungseinheit genutzt werden, mit der die räumliche Lage der beiden getrennten Anspannschnittstellen erfassbar ist. Beispiele für entsprechende Verfahren und Vorrichtungen finden sich in der EP-A-1 862 050 und EP-A-1 238 577. Diese sind jedoch nicht unmittelbar einsetzbar für die Regelung des Betriebs eines Schleppgeräts an dem Fahrzeug während der Fahrt.

Die WO-A-2016/076289 beschreibt ein landwirtschaftliches Arbeitsfahrzeug, das mit einer Fernsteuerungsvorrichtung gesteuert und veranlasst wird, mit einer optimalen Arbeitsgeschwindigkeit und einem optimalen Antriebswert entlang einer eingestellten Fahrstrecke zu arbeiten. An ein Steuergerät des Arbeitsfahrzeugs ist eine Postitionsberechnungseinrichtung zum Messen der Position des Arbeitsfahrzeugs angeschlossen. Weiterhin ist an das Steuergerät eine Kamera angeschlossen, um eine an das Arbeitsfahrzeug angebaute Arbeitsmaschine abzubilden. Die Kamera ist an dem Arbeitsfahrzeug angeordnet. Dieses Konzept ist allein auf den Fahrbetrieb des Arbeitsfahrzeugs eingerichtet und ermöglicht insoweit nur eine Steuerung der Fahrzeugbewegung des Arbeitsfahrzeuges.

Die JP-A-H04 183 301 bezieht sich auf eine Vorrichtung zur Begradigung einer Bodenfläche mit einem Planierschild und eine Kippsteuereinrichtung für den Planierschild.

Auch wenn die geschilderten Ansätze für den Betrieb solcher Traktoren bzw. Ackerschlepper bereits gute Ergebnisse liefern, so sind die verfügbaren Systeme gleichwohl teilweise zu komplex und damit zu kostenintensiv, nicht ausreichend verlässlich und/oder zu ungenau. Insoweit besteht insbesondere bei der Ermittlung der Lage des Schleppgeräts Bedarf an Verbesserungen.

Hiervon ausgehend ist es Aufgabe der vorliegenden Erfindung, eine Vorrichtung und ein Verfahren zu schaffen, die die genannten Nachteile lindern oder sogar vermeiden. Insbesondere soll auf konstruktiv einfache und für die Umgebungsbedingungen im Feld geeignete Art die Ermittlung der Lage des Anbaugeräts verbessert werden. Außerdem soll das Verfahren automatisch eine korrekte Einstellung des Anbaugeräts ermöglichen.

Diese Aufgaben werden gelöst mit einer Vorrichtung und einem Verfahren gemäß den unabhängig formulierten Patentansprüchen. Weitere Ausgestaltungen der Erfindung sind in den abhängig formulierten Patentansprüchen angegeben. Es ist darauf hinzuweisen, dass die Beschreibung, insbesondere im Zusammenhang mit den Figuren, weitere Einzelheiten und Weiterbildungen der Erfindung anführen, die mit den Merkmalen aus den Patentansprüchen kombinierbar sind.

Hierzu trägt eine Vorrichtung an einem Fahrzeug mit einer hydraulischen Betätigungseinheit zur Regelung des Betriebs eines Anbaugeräts an dem Fahrzeug bei, umfassend zumindest eine Lageerfassungseinheit mit mindestens einer Kamera, mindestens einer Lageerfassungsmarkierung, eine Auswerteeinheit und eine datenleitende Verbindung hin zu einem der hydraulischen Betätigungseinheit zugeordneten Steuergerät, wobei die mindestens eine Kamera im Betrieb so hin auf die mindestens eine Lageerfassungsmarkierung und den Boden gerichtet ist, dass eine Neigung des Anbaugeräts um eine Querachse ermittelbar ist und die hydraulische Betätigungseinheit ein Hubwerk für das Anbaugerät und einen Oberlenkerzylinder umfasst.

Dabei handelt es sich bei dem Fahrzeug insbesondere um einen Traktor bzw. einen sogenannten Ackerschlepper. Als Anbaugerät wird insbesondere ein Pflug oder ein ähnliches Bodenbearbeitungsgerät bzw. ein Mähwerk für den Gebrauch an einem Frontlader angesehen. Zur Bestimmung der Neigung des Anbaugeräts um eine Querachse - zusätzlich zur Bestimmung der Höhenlage des Anbaugeräts - ist eine Lageerfassungseinheit vorgesehen, die mindestens eine Kamera sowie eine oder mehrere Lageerfassungsmarkierungen umfasst. Eine Lageerfassungsmarkierung kann ein optisch auffälliges Element sein, wobei dies zweidimensional (z. B. nach Art von Strichen, Symbolen, Aufklebern) und/oder dreidimensional (z. B. nach Art von Nippeln, Fahnen, etc.) sein kann. Die Lageerfassungsmarkierung ist bevorzugt "passiv", es kann aber auch z. B. mit eigenen Leuchtmitteln versehen sein. Bevorzugt ist, dass eine, mit Vorteil mindestens zwei (voneinander beabstandete) Lageerfassungsmarkierungen vorgesehen sind, die insbesondere alle von einer feststehenden (ggf. auch beweglichen) Kamera erfasst werden können. Eine zugehörige Auswerteeinheit ist mit der mindestens einen Kamera elektrisch und datenleitend verbunden und eingerichtet, deren Betrieb zu regeln und deren Messsignale zu verarbeiten. Die Auswerteeinheit ist eingerichtet, eine Analyse der Bilddaten der Kamera vorzunehmen, so dass die Lageerfassungsmarkierungen eindeutig bezüglich ihrer Lage/Position erfasst bzw. bestimmt werden können.

Es ist zweckmäßig, dass die mindestens eine Kamera am Fahrzeug und/oder dem Anbaugerät angeordnet ist. Ggf. können auch mehrere Kameras vorgesehen sein, so dass Fahrzeug und Anbaugerät mit einer Kamera ausgeführt sein können, die spezifischen Funktionen zugeordnet sind.

Die in der Auswerteeinheit bestimmte Lage wird mit vorgegebenen (z. B. gespeicherten und/oder von dem Bediener des Fahrzeugs eingestellten) Parametern abgeglichen oder beeinflusst, wobei dann auch ein Regelungssignal an das Steuergerät übermittelt wird und dabei der Betrieb der hydraulischen Betätigungseinheit des Anbaugeräts beeinflusst wird. Die Auswerteeinheit kann ein separates (elektronisches) Aggregat sein, es ist aber auch möglich, dass die Auswerteeinheit Teil des Steuergeräts zur Ansteuerung der hydraulischen Betätigungseinheit selbst ist. Die (mindestens) eine datenleitende Verbindung zwischen Auswerteeinheit und Steuergerät kann kabelgebunden oder kabellos, z. B. durch Funkverbindung, realisiert sein. Das Steuergerät und/oder die Auswerteeinheit können einer Fahrzeugsteuerung zugeordnet oder unabhängig davon eingerichtet sein.

Die mindestens eine Kamera ist hierfür zweckmäßigerweise hin auf die mindestens eine Lageerfassungsmarkierung gerichtet. Dies kann permanent der Fall sein, oder auch bedarfsgerecht so (temporär) eingestellt werden.

Die mindestens eine Lageerfassungsmarkierung ist zumindest auf dem Anbaugerät angeordnet.

Die Ausführungsform, bei der die mindestens eine Kamera auf das Anbaugerät gerichtet und die Lageerfassungsmarkierungen am Anbaugerät positioniert sind, bietet den Vorteil, dass die bekannte Geometrie bzw. die Abmessungen eines bestimmten Pflugs in der Auswerteeinheit, dem Steuergerät oder der Fahrzeugsteuerung gespeichert und für die Auswertung so einfach bereitgestellt werden kann. Damit kann ggf. die Genauigkeit der Auswertung mit Bezug auf konkret hinterlegte Gestalten des Anbaugeräts verbessert werden.
Die Erfindung zielt darauf ab, die beim Pflügen relevanten Prozessgrößen, das heißt die Lage des Anbaugeräts - und damit zugleich die Tiefe der einzelnen (insbesondere unterhalb des Trägers befindlichen) Pflugscharen zu bestimmen, anstatt Zwischengrößen heranzuziehen, die zwar gute Indikatoren darstellen, aber indirekt die Prozessgrößen abbilden. Dies erfolgt über eine Kamera, so dass die Zugkraftsensoren entfallen.

Der vorgeschlagenen Vorrichtung liegt der Gedanke eines Regelungssystems für ein Anbaugerät, insbesondere Ackerschlepper, mit Aufnahme der Anbaugeräteneigung sowie - höhe mittels Kamera zur prozessoptimalen Einstellung des Anbaugeräts zugrunde. Dadurch kann die Position des Pflugs zur Bodenoberfläche direkt bestimmt werden und die Sicherstellung eines gleichmäßigen Pflugbilds deutlich vereinfacht werden. Außerdem kann bei Vorhandensein der nötigen Stellglieder automatisch eine korrekte Einstellung des Pflugs erfolgen, was ansonsten Aufgabe des Fahrers ist.

Aus der Beobachtung des Pflugs mit einer Kamera wird die Höhenlage und zusätzlich die Neigung bestimmt. Diese Größen fließen in die Regelung der Pflugposition ein und sind einstellbar.

Ein besonderer Vorteil der vorgeschlagenen Maßnahmen ist die direkte Bestimmung der für den Prozess Pflügen relevanten Größen. Die bekannte gemessene Zugkraft kann nur einen Durchschnittswert aller (insbesondere unterhalb des Trägers befindlichen) Pflugscharen abbilden. Fehler durch Verkippung sind hier möglich, ohne detektiert werden zu können. Ein weiterer Vorteil der vorgeschlagenen Vorrichtung besteht in der Ermöglichung der Nutzung weiterer Freiheitsgrade bei der Verstellung des Pflugs. Die Nachteile der bekannten Vorrichtung werden vermieden, bei der nur die Höhe des Pflugs verstellt wird, nicht aber die Neigung/Verkippung des Pflugs in Längs- oder Querrichtung. Da hier keine Information vorliegt, in welchem Winkel der Pflug zur Bodenoberfläche steht, ist die Neigung über einen Aktor dynamisch nicht einzustellen. Der Fahrer kann die Längsneigung lediglich durch die Länge des Oberlenkers feststellen, die Querneigung über eine Einstellschraube. Er wird es in der Regel so tun, dass sich eine gleichmäßige Tiefe bei ebener Bodenoberfläche ergibt. Bei sich ändernder Bodentopologie oder falscher Einstellung ist ein partielles Eintauchen bzw. Ausheben des Pflugs und damit ein ungleichmäßiges Pflugbild nicht zu vermeiden. Durch die automatische Einstellung aller Pflugfreiheitsgerade wird im Gegensatz zu der bekannten Vorrichtung dem Fahrer der oft langwierige Einstellprozess vor dem Pflügen abgenommen. Außerdem können Fehleinstellungen, die in einem ungleichmäßigen Pflugbild resultieren, vermieden werden. Ein weiterer Vorteil besteht im Einsparpotential durch Entfallen der Zugkraftsensoren und insbesondere bei Nutzung einer bereits vorhandenen Rückfahrkamera.

Die hydraulische Betätigungseinheit umfasst bevorzugt ein Hubwerk für das Anbaugerät, das von der Auswerteeinheit aktivierbar ist. Hierfür sind insbesondere elektrische oder datenleitende Verbindungen vorgesehen. Insbesondere sind die Auswerteeinheit und das Hubwerk so eingerichtet, dass die Auswerteeinheit mindestens eine Zustandsgröße einstellen und/oder auf ein Stellorgan des Hubwerks zugreifen kann.

Vorzugsweise ist mindestens eine Lageerfassungsmarkierung an einem von dem Oberlenkerzylinder betätigten Hebelarm angeordnet, der starr mit dem Träger des Anbaugeräts verbunden ist. Durch Verstellung des Oberlenkerzylinders wird die Neigung des Anbaugeräts verändert bzw. eingestellt.

Zweckmäßig umfasst das Hubwerk - neben einem Unterlenkerzylinder für die Einstellung der Höhe des Anbaugeräts - einen Oberlenkerzylinder, der zur Einstellung der Neigung des Anbaugeräts herangezogen wird.

Mit Vorteil ist im Unterlenkerzylinder ein Drucksensor verbaut, der aus dem Druckverlauf im Unterlenkerzylinder Schwingungen des Anbaugeräts detektieren kann und für eine mögliche aktive Schwingungskompensation notwendig ist.

Bevorzugt ist zusätzlich an dem Fahrzeug ein Neigungssensor oder ein Inertialsensor vorgesehen, der datenleitend mit der Auswerteeinheit verbunden ist. Auf diese Weise wird ein sich änderndes Bodenprofil, z. B. Einfahrt in eine Bodensenke oder Ausfahrt aus einer Bodensenke, zusätzlich berücksichtigt.

Weitere Details der Vorrichtung ergeben sich auch aus der nachfolgenden Erläuterung zu dem Betriebsverfahren. Insbesondere können die Erläuterungen zu den Verfahren hier ergänzend herangezogen werden. Ebenso gilt, dass die vorstehenden Erläuterungen zur Vorrichtung die Beschreibung der Verfahren ergänzen können.

Weiter wird hier ein Verfahren zum Betrieb eines Fahrzeugs, insbesondere eines Traktors, mit einer hydraulischen Betätigungseinheit zur Regelung des Betriebs eines Anbaugeräts an dem Fahrzeug vorgeschlagen. Das Verfahren kann insbesondere mit der hier ebenfalls vorgeschlagenen Vorrichtung durchgeführt werden, wobei insbesondere die Auswerteeinheit dazu eingerichtet ist, das Verfahren durchzuführen.

Das Verfahren umfasst zumindest die folgenden Schritte:
a) Ermitteln der Höhe des Anbaugeräts;
b) Ermitteln der Neigung des Anbaugeräts;
c) Vergleich der ermittelten Höhe und der ermittelten Neigung mit einer Referenzhöhe bzw. Referenzneigung;
d) Aktivieren der hydraulischen Betätigungseinheit, wenn die ermittelte Höhe und die ermittelte Neigung von der Referenzhöhe bzw. der Referenzneigung abweichen.

Die Schritte a) bis d) werden bevorzugt in der angegebenen Reihenfolge durchgeführt, wobei gleichwohl die Schritte zumindest teilweise zeitlich überlagert und/oder separat wiederholt werden können. So kann es bspw. auftreten, dass die Schritte a) bis c) häufiger wiederholt werden, bevor Schritt d) durchgeführt wird, nämlich insbesondere dann, wenn die Bedingung in Schritt d) erfüllt ist.

Zur Durchführung von Schritt a) erfasst eine ausgewählte bzw. ggf. speziell eingerichtete Kamera die mindestens eine Lageerfassungsmarkierung, wobei sie insbesondere ein Abbild davon erstellt und an die Auswerteeinheit übermitteln kann. Zu diesem Zweck kann die Kamera verfahren bzw. geschwenkt werden und/oder in einer Position ortsfest fixiert sein. Dieses Abbild kann gleichzeitig analysiert und/oder ggf. zwischengespeichert werden.

Ausgehend von diesen seitens der Kamera erzeugten (Bild-)Daten kann gemäß Schritt b) zumindest die Höhenlage des Anbaugeräts relativ in Bezug zum Fahrzeug aus der erfassten Lage der Lageerfassungsmarkierungen und der bekannten Gestalt des Anbaugeräts ermittelt werden. Die relative "Höhenlage" betrifft in diesem Zusammenhang bevorzugt eine Kenngröße, die bspw. eine Aussage zur Eindringtiefe der Pflugschare des Anbaugeräts in den Boden repräsentiert.

Die so ermittelte Höhenlage und Neigungslage kann insbesondere in der Auswerteeinheit mit einer Referenz-Höhenlage bzw. Referenz-Neigungslage verglichen werden (Schritt c). Die Referenz-Höhenlage und die Referenz-Neigungslage kann im Fahrzeug hinterlegt bzw. gespeichert sein und der Auswerteeinheit zur Verfügung gestellt werden. Die (aktuelle) Referenz-Höhenlage und (aktuelle) Referenz-Neigungslage wird insbesondere in Abhängigkeit mindestens eines (aktuellen) Betriebsparameters des Fahrzeugs (z. B. Geschwindigkeit, Motorlast etc.) und/oder der hydraulischen Betätigungseinheit (z. B. Hubwerkseinstellung, etc.) ausgewählt. Insoweit wird insbesondere geprüft, ob eine gewünschte bzw. erwartete Referenz-Höhenlage tatsächlich aktuell vorliegt.

Gemäß Schritt d) wird dann, wenn die ermittelte Höhenlage und die ermittelte Neigungslage von der aktuellen relevanten bzw. erwarteten Referenz-Höhenlage sowie Referenz-Neigungslage abweicht, die hydraulische Betätigungseinheit aktiviert, um eine Anpassung der aktuellen Lage des Anbaugeräts zur Referenz-Höhenlage bzw. Referenz-Neigungslage vorzunehmen, also insbesondere die Höhenlage und die Neigungslage des Anbaugeräts über dem Boden anzuheben oder abzusenken bzw. die Neigung zu ändern. Ggf. kann dieser Betätigungsvorgang auch mit den Schritten a) bis c) genannten Schritten überwacht und geregelt werden. Es ist aber auch möglich, dass eine separate Vorgabe aus dem Vergleich gemäß Schritt c) fest vorgegeben und gesteuert wird.

Bevorzugt ist, dass alle Schritte a) bis d) während der Fahrt des Fahrzeugs, das heißt im Betrieb, durchgeführt werden. Ganz besonders bevorzugt wird das Verfahren vom Fahrer und/oder automatisch mit vorgebbaren Fahrsituationen angestoßen und dann intermittierend und/oder kontinuierlich durchgeführt, bis es vom Fahrer und/oder automatisch bei einer vorgebbaren Fahrsituation beendet wird.

Mit Vorteil wird in einem zusätzlichen Schritt die Neigung des Fahrzeugs ermittelt. Zweckmäßig wird zusätzlich die Neigung der Bodenoberfläche mit einem an dem Fahrzeug vorgesehenen Neigungssensor oder Inertialsensor ermittelt. Vorzugsweise wird die Position des Fahrzeugs mit einem GPS-System (Global Positioning System) ermittelt. Mit Vorteil wird die Kamera auch zur Bestimmung der Geschwindigkeit des Fahrzeugs herangezogen. Bevorzugt werden die in den Schritten a), b) und b₁) ermittelte Höhe und Neigung verwendet, wenn jeweils ein vorgebbarer Anwendungsparameter erreicht wird. Zweckmäßig werden die erwarteten Höhen und Neigungen seitens einer Fahrzeugsteuerung ermittelt und bereitgestellt.

Die hier aufgezeigte Anordnung und/oder Methode zur Lageregelung bietet insbesondere die Vorteile, dass die Lage (Position) bzw. Tiefe und die Neigung des Anbaugeräts, insbesondere eines Pflugs, durch die Bestimmung der Lage mittels der Kamera in verlässlicher, genauer und technisch einfacher Weise realisiert ist.

Die Zugkraft bei Nutzung der bekannten EHR (Elektrohydraulische Hubwerksregelung) kann immer nur ein Maß für die durchschnittliche Tiefe aller Pflugscharen sein. Der Kraftwert für einzelne Pflugscharen kann aber durchaus davon abweichen, wenn der Pflug verkippt ist (z. B. beim Einfahren in eine Senke, Neigungsänderung durch ungünstig "geformten" Viergelenkmechanismus der Anbaugeräteaufnahme, Änderung des Höhenprofils). Somit kann trotz gleichbleibender Zugkraft ein ungleichmäßiges Pflugbild entstehen. Zudem wird mit dem bekannten EHR-System die Lage des Pflugs relativ zum Traktor und nicht absolut gegenüber dem Bodenprofil gemessen. Die Lage des Pflugs kann somit nicht der Topologie des Bodenprofils angepasst werden. Im Gegensatz dazu wird mit der hier vorgeschlagenen Anordnung und dem vorgeschlagenen Verfahren ein verbessertes Pflugbild erreicht, indem die Neigung des Traktors sowie die Höhe des Pflugs und die Neigung des Pflugs gemessen werden und die Lage des Pflugs durch eine zusätzliche Ansteuerung des Oberlenkers mit einem zusätzlichen Oberlenkerzylinder an das sich ändernde Bodenprofil angepasst werden kann. Zudem kann das Kamerasignal genutzt werden, um eine kostengünstige Alternative zur Bestimmung der tatsächlichen Fahrzeuggeschwindigkeit abzubilden. Hierdurch kann auch auf den Radarsensor und auch auf die Kraftmessbolzen verzichtet werden, da ein Eingraben der Räder und ein Abwürgen des Motors allein durch die überlagerte Regelung des Schlupfs verhindert werden kann. Über einen zusätzlichen kostengünstigen Drucksensor im Unterlenkerzylinder kann die Schwingungstilgung des Anbaugeräts sichergestellt werden.

Den erfindungsgemäßen Maßnahmen liegt insbesondere der Gedanke einer Sensoranordnung am Traktor (im speziellen eine Kamera zur Aufnahme des Anbaugeräts und des umgebenden Bodens, Neigungssensor, GPS-Sensor, Inertialslensor, Drucksensor) sowie eine geeignete Regelstrategie zugrunde, welche die Lage des Pflugs so ändert bzw. anpassen kann, dass alle im Eingriff befindlichen Pflugschare nahezu gleichmäßig dem Bodenprofil folgen und sich somit ein einheitliches und gleichmäßiges Pflugbild einstellt.

Durch die erfindungsgemäßen Maßnahmen ergeben sich insbesondere folgende Vorteile:
- Erhöhung der Prozessgüte während der Bodenbearbeitung durch ein Anpassen sowohl der Eindringtiefe als auch der Neigung des Pflugs an die vorhandene Topologie des Bodenprofils,
- Reduzierung der Systemkosten durch Entfall der kostenintensiven Zugkraftsensoren und des kostenintensiven Radarsensors und durch Nutzung deutlich kostengünstigerer Alternativsensoren.

Die Erfindung und das technische Umfeld werden nachfolgend anhand von Figuren näher erläutert. Dabei sind gleiche Bauteile mit gleichen Bezugszeichen gekennzeichnet. Die Darstellungen sind schematisch und nicht zur Veranschaulichung von Größenverhältnissen vorgesehen. Die mit Bezug auf einzelne Details einer Figur angeführten Erläuterungen sind extrahierbar und mit Sachverhalten aus anderen Figuren oder der vorstehenden Beschreibung frei kombinierbar, es sei denn, dass sich für einen Fachmann zwingend etwas anderes ergibt bzw. eine solche Kombination hier explizit untersagt wird. Es zeigen:
- Fig. 1:: schematisch eine Seitenansicht eines Traktors mit einer hydraulischen Betätigungseinheit zur Regelung des Betriebs eines Anbaugeräts umfassend eine Kamera für eine Lageerfassungseinheit;
- Fig. 2:: Seitenansicht gemäß Fig. 1, bei der die am Fahrzeug angebrachte Kamera auf das Anbaugerät gerichtet und am Schleppgerät die Lageerfassungsmarkierungen der Lageerfassungseinheit positioniert sind;
- Fig. 3:: schematische Darstellung eines Traktors mit angebautem Pflug beim Pflügen während des Einfahrens in eine Bodensenke mit einer bekannten Vorrichtung;
- Fig. 3a bis 3d:: Darstellung der Wiederstands- bzw. Pflugkräfte gegenüber der Zeit an den in den Boden eingedrungenen Pflugscharen;
- Fig. 4:: schematische Darstellung des Traktors und des Pflugs während des Einfahrens in eine Bodensenke mit der erfindungsgemäßen Vorrichtung sowie eine bevorzugt einzustellende Position der Pflugscharen; und
- Fig. 5:: eine unterschiedliche Neigung der Pflugscharen.

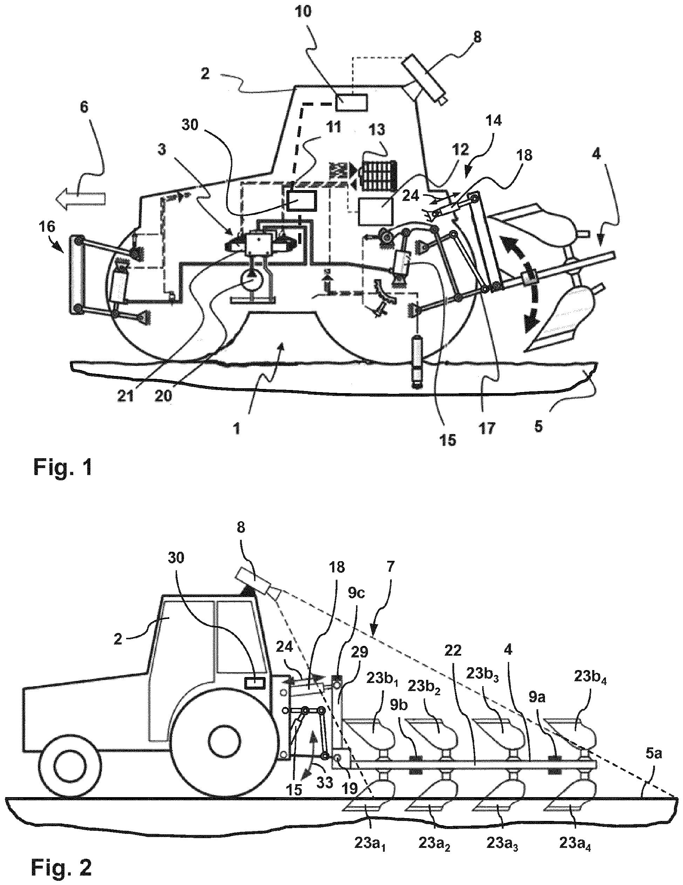

Fig. 1 zeigt die prinzipielle Darstellung der hier angegebenen Vorrichtung 1 an einem Fahrzeug 2, insbesondere nach Art eines Traktors bei der Bodenbearbeitung mit einem Schleppgerät, insbesondere mit einem Pflug. Dabei zieht das Fahrzeug 2 bei einer Fahrt in Fahrtrichtung 6 das Anbaugerät 4 hinter sich her und durch die Oberschicht des Bodens 5. Optional hat das Fahrzeug 2 auch ein Fronthubwerk 16. Der allgemeine Fahrbetrieb des Fahrzeugs 2 kann über eine (ggf. separate) Fahrzeugsteuerung 12 beeinflusst werden. Die Lage bzw. Position des Anbaugeräts 4 kann mit einer hydraulischen Betätigungseinheit 3, aufweisend ein Steuergerät 13 zur Ansteuerung der hydraulischen Betätigungseinheit 3 und ein heckseitiges Hubwerk 14 mit einem Unterlenkerzylinder 15 eingestellt werden. Die hydraulische Betätigungseinheit 3 kann insbesondere wie folgt aufgebaut sein: die Pumpe 20 fördert einen Ölstrom zum Regelventil 21, welches den Unterlenkerzylinder 15 steuert. Dieser wirkt auf die Unterlenker 17, wodurch das Anbaugerät 4 gehoben, gehalten oder abgesenkt werden kann. Mit 18 ist der Oberlenker des Hubwerks 14 bezeichnet. An dem Träger 22 (siehe Fig. 2) ist etwa in einem rechten Winkel ein Hebelarm 29 starr befestigt, an dem das eine Ende eines Oberlenkerzylinders 18 angreift, dessen anderes Ende am Traktor gelagert ist. Mit 24 ist die Bewegungsrichtung des Kolbens im Oberlenkerzylinder 18, bezeichnet.

Weiter ist eine Kamera 8 einer Lageerfassungseinheit 7 vorgesehen, die an bzw. auf dem Fahrzeug 2 angebracht ist. Die Kamera 8 ist auf das (abgebrochen dargestellte, hier einen Pflug bildende) Anbaugerät 4 gerichtet. Die Kamera 8 kann z. B. eine für optische Messungen geeignete Rückwärts- bzw. Rückfahrkamera oder eine speziell für den hier beschriebenen Anwendungszweck verbaute Digitalkamera (hochauflösend) sein.

Fig. 2 zeigt eine schematische Darstellung des Fahrzeugs 2 (Ackerschlepper) während des Pflügens mit einem EHR-System. Hierbei ist der Pflug über den Unterlenker 17 und den hydraulisch verstellbaren Oberlenkerzylinder 18 mit dem Traktor verbunden. Da der Unterlenker 17 durch den Unterlenkerzylinder 15 in seiner Höhe verstellt werden kann, ist es möglich den Pflug in dieser Konstellation sowohl in seiner Höhe als auch in seiner Neigung um die Querachse 19 zu verstellen.

Um die Lage des Pflugs im Raum und somit auch seine Tiefe bzw. Höhe (Höhenlage 25) sowie seine Neigung (Neigungslage 26) ermitteln zu können, sind gemäß Fig. 2 an einem Träger 22 des Pflugs bspw. zwei optisch markante Lageerfassungsmarkierungen 9a, 9b beidseitig angebracht, z. B. durch Kleben. Außerdem ist an dem Hebelarm 29 eine weitere Lageerfassungsmarkierung 9c befestigt.

In Fig. 2 sind mit 23a₁ bis 23a₄ unterhalb und mit 23b₁ bis 23b₄ oberhalb des Trägers 22 angeordnete Pflugscharen bezeichnet. Die unterhalb angeordneten Pflugscharen 23a₁ bis 23a₄ sind teilweise in den Boden 5 eingedrungen. Mit 5a ist die Bodenoberfläche bezeichnet.

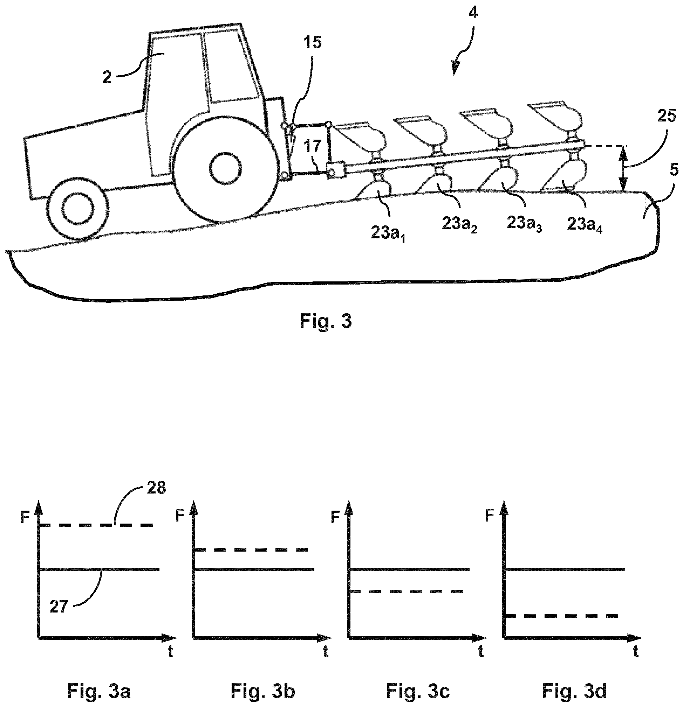

Fig. 3 zeigt die schematische Darstellung eines Traktors beim Pflügen mit einem elektrohydraulischen Hubwerksregelsystem (EHR-System) in einer bekannten Ausführungsform. Der Traktor (Fahrzeug 2) fährt samt Pflug (Anbaugerät 4) in eine Senke des Bodens 5 ein. Deutlich zu erkennen ist, dass die vorderen Pflugschare 23a₁ und 23a₂ tiefer in den Boden einsinken als die hinteren Pflugschare 23a₃,23a₄. Den in Fig. 3a bis 3d schematischen Darstellungen der Widerstands- bzw. Pflugkräfte ist ein Ausschnitt des zeitlichen Verlaufs eben dieser zu entnehmen. Hierbei dargestellt sind jeweils die wirkende Widerstandskraft 28 sowie die mittlere Widerstandskraft aller Pflugscharen 27. Die Widerstands- bzw. Pflugkräfte für die vorderen Schare 23a₁,23a₂ sind dabei signifikant größer als die Widerstands- bzw. Pflugkräfte der hinteren Schare 23a₃,23a₄.

Nun kann die EHR zwar bedingt auf sich ändernde Bodentopologien bzw. Bodenoberflächen reagieren, indem durch das verstärkte Eintauchen der hinteren bzw. vorderen Schare und in der Regel der daraus resultierenden Erhöhung der Gesamtwiderstands- bzw. -pflugkraft (gemessen an den Kraftsensoren in den Gelenkpunkten des Unterlenkers 17) der eingestellte Sollwert der Regelung überschritten und der Pflug infolge ausgehoben wird. Dies erfolgt jedoch in relativer Änderung zum Traktor und nicht absolut zum Bodenprofi. Ein gleichmäßiges Pflugbild, bei dem sich die Neigung des Pflugs annähernd nach der Topologie der Ebene des zu bearbeitenden Bodens einstellt, kann mit dieser bekannten Anordnung nicht erreicht werden. Zudem werden hierbei zwei kostenintensive Kraftmessbolzen benötigt, welche einen erheblichen Anteil der Gesamtkosten eines EHR-Systems ausmachen.

Diese Problematik tritt vor allem bei kleineren Ackerschleppern auf, bei denen der traktorseitige Abstand der Gelenkpunkte zwischen Ober- und Unterlenkeranbindung teils deutlich größer oder kleiner ist, als der anbaugeräteseitige Abstand der Gelenkpunkte zwischen Oberlenker- und Unterlenkeranbindung. Dadurch ergibt sich eine ungünstige Form des entsprechenden Viergelenkmechanismus, welches kein vorteilhaftes Parallelogramm abbildet und somit für die höhenabhängige Neigung des Pflugs bzw. Anbaugeräts verantwortlich zeigt. Bei externer Verkippung kann letzten Endes ein zufriedenstellendes Pflugbild nicht garantiert werden, da die Pflugscharen ungleichmäßig in den Boden eindringen.

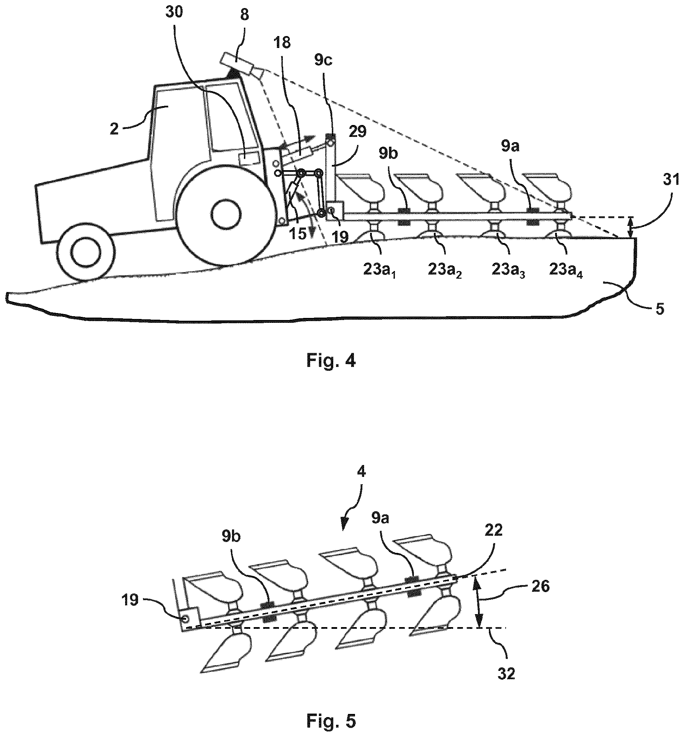

Fig. 4 zeigt die Darstellung des Traktors (Fahrzeug 2) und des angebauten Pflugs (Anbaugerät 4) während des Einfahrens in eine Bodensenke mit der erfindungsgemäßen Vorrichtung und unter Anwendung des erfindungsgemäßen Verfahrens sowie eine bevorzugte einzustellende Position der Pflugscharen 23a₁ bis 23a₄. Hierbei sind - im Gegensatz zu Fig. 3 - ein verstellbarer Oberlenkerzylinder 18 und ein Neigungssensor 30 vorhanden. Hierbei ist der Pflug über den Unterlenker 17 und den hydraulisch verstellbaren Oberlenkerzylinder 18 mit dem Traktor verbunden. Da der Unterlenker 17 durch den Unterlenkerzylinder 15 in seiner Höhe verstellt werden kann, ist es möglich, den Pflug in dieser Konstellation sowohl in seiner Höhe als auch in seiner Neigung um die Querachse 19 zu verstellen.

Um die Höhe und die Neigung des Anbaugeräts relativ zum Traktor bestimmen zu können, wird vorgeschlagen, eine Kamera 8 so auf dem Traktor zu installieren, dass sie den Pflug und das entsprechende Umfeld erfassen kann. So kann sie z. B. auch als Rückfahrkamera genutzt werden. Um die Lage des Pflugs im Raum (vor allem Höhe und Neigung des Anbaugeräts) aus den Kamerabildern bestimmen zu können, werden eine bestimmte Anzahl an optischen Markierungen 9a bis 9c an dem Anbaugerät angebracht. Für die eigentliche Bestimmung der Lage wird jedoch zumindest nur eines benötigt. Die anderen Markierungen dienen zur Erhöhung der Redundanz, falls eine oder mehrere Markierung(en) verdeckt oder verschmutzt sein sollten. Ist die Kamera 8 am Traktor kalibriert, ist die Anbringung der optischen Markierungen 9a bis 9c am Anbaugerät beliebig möglich. Um ein Eingraben der Antriebsräder oder ein Abwürgen des Dieselmotors zu verhindern, wird zudem vorgeschlagen, die tatsächliche Geschwindigkeit des Traktors über Grund ebenso mit der Kamera 8 zu bestimmen. Hierfür sollen zwei oder mehrere zeitlich hintereinander aufgenommene Kamerabilder des erfassten Umfelds korreliert und daraus die Geschwindigkeit abgleitet werden. Dieses gewonnene Signal kann ggf. durch ein GPS-Signal oder durch Beschleunigungssignale aus einem Inertialsensor abgestützt werden. Mit dem somit erhaltenen Geschwindigkeitssignal und der Raddrehzahl kann auf den tatsächlichen Schlupf geschlossen und dieser auf einen Sollwert eingeregelt werden, so dass ein Durchdrehen/Eingraben der Räder sowie ein Abwürgen des Dieselmotors durch (kurzzeitiges) Ausheben des Pflugs vermieden werden kann. Durch einen zusätzlich am Anschluss des Unterlenkerzylinders 15 zu installierenden kostengünstigen (nicht dargestellten) Drucksensor kann die Schwingungstilgung des Anbaugeräts sichergestellt werden.

Um die Neigung des Pflugs bei sich ändernder Topologie des Bodenprofils anzupassen, muss die Neigung des Profils erfasst werden. Hierfür wird vorgeschlagen, den Traktor entweder mit einem Neigungssensor 30 oder einem Intertialsensor auszustatten, aus dessen Drehraten und Beschleunigungen auf die tatsächliche Neigung geschlossen werden kann. Das Neigungsprofil wird auf einem Steuergerät 13 gespeichert und mit Hilfe der Kenntnis der tatsächlichen Fahrzeuggeschwindigkeit über Grund kann auf den Zeitpunkt geschlossen werden, an dem die Profiländerung über die Ansteuerung des Oberlenkerzylinders 18 ausgeglichen werden muss. Im Grunde handelt es sich somit um eine Art Vorsteuerung zur Ansteuerung des Oberlenkerzylinders 18 und eine Verbesserung der Prozessgüte und des Pflugbilds wird erreicht.

Es ist eine Anordnung von Sensoren und ansteuerbaren Zylindern sowie eine Betriebsstrategie vorgeschlagen, um die Prozessgüte während der Bodenbearbeitung zu verbessern. Vorrangig wird die Kamera 8 genutzt und ihre Bilder in der Art ausgewertet, so dass sowohl die Höhe als auch die Neigung des Pflugs relativ zum Traktor ermittelt werden. Mit Kenntnis der Neigung des Traktors (z. B. durch Neigungssensoren 30 oder durch Inertialsensoren mit entsprechender Auswertung der Beschleunigungs- und Drehratensignale) kann der Pflug in seiner Neigung immer dem Bodenprofil angeglichen werden. Durch eine Ansteuerung des Unterlenkerzylinders 15 (Hubwerkzylinder) und des Oberlenkerzylinders 18 wird die Lage des Pflugs dahingehend angepasst, dass alle Pflugschare 23a₁-23a₄ eine annähernd gleiche Einbringtiefe aufweisen und die Pfluglage somit dem Bodenprofil folgt. Eine Verbesserung des Pflugbilds stellt sich somit ein. Ggf. lassen sich zudem Kostenvorteile darstellen, da nur eine Minimalzahl von Sensoren verbaut werden.

Ein weiterer Vorteil besteht darin, wenn auf den kostenintensiven Radarsensor zur Geschwindigkeitsbestimmung über Grund verzichtet werden kann. Die Geschwindigkeit über Grund wird zur Berechnung des Schlupfs benötigt. Eine überlagerte Schlupfregelung sorgt durch ein Ausheben des Pflugs dafür, dass ein Durchdrehen der Räder sowie ein Abwürgen des Motors bei zu hohen Pflug- bzw. Zugkräften vermieden wird. In Verbindung mit der Möglichkeit, die Pflughöhe und die Pflugneigung dem Bodenprofil anzupassen und somit für ein einheitliches Bodenprofil zu sorgen, besteht die vorteilhafte Möglichkeit, auf die beiden kostenintensiven Zugkraftsensoren zu verzichten. Aus diesem Grund wird für eine kostengünstige Bestimmung der tatsächlichen Fahrzeuggeschwindigkeit über Grund weiterhin vorgeschlagen, die Signale/Bilder der Kamera 8, z. B. durch Korrelation zweier oder mehrerer zeitlich hintereinander aufgenommener Bilder, hierfür zu verwenden. Das erhaltene Signal kann ggf. noch durch ein zusätzliches GPS-Signal oder über (integrierte) Beschleunigungssignale aus Intertialsensoren abgestützt werden.

### Bezugszeichen

- 1.: Vorrichtung
- 2: Fahrzeug
- 3: hydraulische Betätigungseinheit
- 4: Anbaugerät
- 5: Boden
- 5a: Bodenoberfläche
- 6: Fahrtrichtung
- 7: Lageerfassungseinheit
- 8: Kamera
- 9a: erste Lageerfassungsmarkierung
- 9b: zweite Lageerfassungsmarkierung
- 9c: dritte Lageerfassungsmarkierung
- 10: Auswerteeinheit
- 11: datenleitende Verbindung
- 12: Fahrzeugsteuerung
- 13: Steuergerät
- 14: Hubwerk
- 15: Unterlenkerzylinder
- 16: Fronthubwerk
- 17: Unterlenker
- 18: Oberlenkerzylinder
- 19: Querachse
- 20: Pumpe
- 21: Regelventil
- 22: Träger
- 23a₁ bis 23a₄: Pflugschare unterhalb des Trägers
- 23b₁ bis 23b₄: Pflugschare oberhalb des Trägers
- 24: Bewegungsrichtung
- 25: Höhenlage
- 26: Neigungslage
- 27: mittlere Widerstandskraft
- 28: Widerstandskraft
- 29: Hebelarm
- 30: Neigungssensor
- 31: Referenz-Höhenlage
- 32: Referenz-Neigungslage
- 33: Bewegungsrichtung

## Patentansprüche

1. Vorrichtung (1) an einem Fahrzeug (2) mit einer hydraulischen Betätigungseinheit (3) zur Regelung des Betriebs eines Anbaugeräts (4) an dem Fahrzeug (2), umfassend zumindest eine Lageerfassungseinheit (7) mit mindestens einer Kamera (8), mindestens einer Lageerfassungsmarkierung (9a, 9b, 9c), eine Auswerteeinheit (10) und eine datenleitende Verbindung (11) hin zu einem der hydraulischen Betätigungseinheit (3) zugeordneten Steuergerät (13), wobei die mindestens eine Kamera (8) im Betrieb so hin auf die mindestens eine Lageerfassungsmarkierung (9a, 9b, 9c) und den Boden (5) gerichtet ist, dass eine Neigung des Anbaugeräts (4) um eine Querachse (19) ermittelbar ist und die hydraulische Betätigungseinheit (3) ein Hubwerk (14) für das Anbaugerät (4) und einen Oberlenkerzylinder (18) umfasst, wobei die Auswerteeinheit (10) eingerichtet ist, Bilddaten der mindestens einen Kamera (8) zu analysieren, so dass die Lage der mindestens einen Lageerfassungsmarkierung (9a, 9b, 9c) eindeutig bestimmbar und mit vorgegebenen Parametern abgleichbar ist, wobei die Auswerteeinheit (10) eingerichtet ist die Höhe (25) des Anbaugeräts (4) zu ermitteln,
**dadurch gekennzeichnet, dass**
die Auswerteeinheit (10) eingerichtet ist die Neigung (26) des Anbaugeräts (4) zu ermitteln, die ermittelte Höhe (25) und die ermittelte Neigung (26) mit einer Referenzhöhe bzw. Referenzneigung zu vergleichen, und die hydraulische Betätigungseinheit (3) zu aktivieren, wenn die ermittelte Höhe (25) und die ermittelte Neigung (26) von der Referenzhöhe bzw. der Referenzneigung abweichen.

2. Vorrichtung (1) nach Anspruch 1, **dadurch gekennzeichnet, dass** mindestens eine Lageerfassungsmarkierung (9c) an einem von dem Oberlenkerzylinder (18) betätigbaren Hebelarm (29) angeordnet ist.

3. Vorrichtung (1) nach Anspruch 1 oder 2, **dadurch gekennzeichnet, dass** die hydraulische Betätigungseinheit (3) zur Ansteuerung des Oberlenkerzylinders (18) und eines Hubwerkszylinders (Unterlenkerzylinder 15) herangezogen wird.

4. Vorrichtung (1) nach einem der vorhergehenden Ansprüche, **dadurch gekennzeichnet, dass** am Anschluss des Unterlenkerzylinders (15) oder im Unterlenkerzylinder (15) ein Drucksensor verbaut ist.

5. Vorrichtung (1) nach einem der vorhergehenden Ansprüche, **dadurch gekennzeichnet, dass** zusätzlich an dem Fahrzeug (2) ein Neigungssensor (30) oder ein Inertialsensor vorgesehen ist, der datenleitend mit der Auswerteeinheit (10) verbunden ist.

6. Verfahren zum Betrieb eines Fahrzeugs (2) mit einer hydraulischen Betätigungseinheit (3) zur Regelung des Betriebs eines Anbaugeräts (4) an dem Fahrzeug (2), wobei das Verfahren zumindest die folgenden Schritte umfasst:
a) Ermitteln der Höhe (25) des Anbaugeräts (4);
b) Ermitteln der Neigung (26) des Anbaugeräts (4);
c) Vergleich der ermittelten Höhe (25) und der ermittelten Neigung (26) mit einer Referenzhöhe bzw. Referenzneigung;
d) Aktivieren der hydraulischen Betätigungseinheit (3), wenn die ermittelte Höhe (25) und die ermittelte Neigung (26) von der Referenzhöhe bzw. der Referenzneigung abweichen.

7. Verfahren nach Anspruch 6, **dadurch gekennzeichnet, dass** in einem zusätzlichen Schritt b₁) die Neigung des Fahrzeugs (2) ermittelt wird.

8. Verfahren nach Anspruch 6 oder 7, wobei zusätzlich die Neigung der Bodenoberfläche (5a) mit einem an dem Fahrzeug (2) vorgesehenen Neigungssensor (30) oder Intertialsensor ermittelt wird.

9. Verfahren nach einem der Ansprüche 6 bis 8, wobei alle Schritte a) bis d) während der Fahrt des Fahrzeugs (2) durchgeführt werden.

10. Verfahren nach einem der Ansprüche 6 bis 9, wobei die Position des Fahrzeugs (2) mit einem GPS-System ermittelt wird.

11. Verfahren nach einem der Ansprüche 6 bis 10, wobei die Kamera (8) auch zur Bestimmung der Geschwindigkeit des Fahrzeugs (2) herangezogen wird.

12. Verfahren nach einem der Ansprüche 6 bis 11, wobei die in den Schritten a), b) und b₁) ermittelte Höhe (25) und Neigung (26) verwendet werden, wenn jeweils ein vorgebbarer Anwendungsparameter erreicht wird.

13. Verfahren nach einem der Ansprüche 6 bis 12, wobei die erwarteten Höhen und Neigungen seitens einer Fahrzeugsteuerung (12) ermittelt und bereitgestellt werden.

14. Verfahren nach einem der Ansprüche 6 bis 13, wobei zumindest eine Höhenlage (25) zum Boden, eine Neigung um eine Querachse (19), eine Drehung um eine Längsachse oder eine Drehung um eine Höhenachse ermittelt werden.

## Claims

1. Device (1) on a vehicle (2) having a hydraulic actuating unit (3) for governing the operation of an attachment (4) on the vehicle (2), comprising at least one position detection unit (7) with at least one camera (8), at least one position detection mark (9a, 9b, 9c), an evaluation unit (10) and a data-carrying connection (11) to a control device (13) assigned to the hydraulic actuating unit (3), wherein the at least one camera (8) is aimed at the at least one position detection mark (9a 9b, 9c) and the ground (5) during operation, so that an inclination of the attachment (4) about a transverse axis (19) can be determined, and the hydraulic actuating unit (3) comprises a lifting mechanism (14) for the attachment (4) and a top link cylinder (18), wherein the evaluation unit (10) is set up to analyse image data from the at least one camera (8), so that the position of the at least one position detection mark (9a, 9b, 9c) can be determined unambiguously and can be compared with predefined parameters, wherein the evaluation unit (10) is set up to determine the height (25) of the attachment (4),
**characterized in that**
the evaluation unit (10) is set up to determine the inclination (26) of the attachment (4), to compare the determined height (25) and the determined inclination (26) with a reference height and reference inclination, respectively, and to activate the hydraulic actuating unit (3) when the determined height (25) and the determined inclination (26) differ from the reference height or reference inclination, respectively.

2. Device (1) according to Claim 1, **characterized in that** at least one position detection mark (9c) is arranged on a lever arm (29) that can be actuated by the top link cylinder (18).

3. Device (1) according to Claim 1 or 2, **characterized in that** the hydraulic actuating unit (3) is used to drive the top link cylinder (18) and a lifting mechanism cylinder (bottom link cylinder 15).

4. Device (1) according to one of the preceding claims, **characterized in that** a pressure sensor is installed on the connection of the bottom link cylinder (15) or in the bottom link cylinder (15).

5. Device (1) according to one of the preceding claims, **characterized in that** an inclination sensor (30) or an inertial sensor, which is connected to the evaluation unit (10) in a data-carrying manner, is additionally provided on the vehicle (2).

6. Method for the operation of a vehicle (2) having a hydraulic actuating unit (3) for governing the operation of an attachment (4) on the vehicle (2), wherein the method comprises at least the following steps:
a) determining the height (25) of the attachment (4) ;
b) determining the inclination (26) of the attachment (4);
c) comparing the determined height (25) and the determined inclination (26) with a reference height and reference inclination, respectively,
d) activating the hydraulic actuating unit (3) when the determined height (25) and the determined inclination (26) deviate from the reference height or the reference inclination, respectively.

7. Method according to Claim 6, **characterized in that** the inclination of the vehicle (2) is determined in an additional step b₁).

8. Method according to Claim 6 or 7, wherein in addition the inclination of the ground surface (5a) is determined with an inclination sensor (30) or inertial sensor provided on the vehicle (2).

9. Method according to one of Claims 6 to 8, wherein all the steps a) to d) are carried out while the vehicle (2) is travelling.

10. Method according to one of Claims 6 to 9, wherein the position of the vehicle (2) is determined with a GPS system.

11. Method according to one of Claims 6 to 10, wherein the camera (8) is also used for determining the speed of the vehicle (2).

12. Method according to one of Claims 6 to 11, wherein the height (25) and inclination (26) determined in the steps a), b) and b₁) are used if a predefined application parameter is respectively reached.

13. Method according to one of Claims 6 to 12, wherein the expected heights and inclinations are determined and provided by a vehicle control system (12).

14. Method according to one of Claims 6 to 13, wherein at least one vertical position (25) relative to the ground, an inclination about a transverse axis (19), a rotation about a longitudinal axis or a rotation about a vertical axis are determined.

## Revendications

1. Dispositif (1) sur un véhicule (2) comprenant une unité d'actionnement hydraulique (3) destinée à réguler le fonctionnement d'un outil porté (4) sur le véhicule (2), comprenant au moins une unité de détection de position (7) dotée d'au moins une caméra (8), d'au moins un repère de détection de position (9a, 9b, 9c), d'une unité d'interprétation (10) et d'une liaison de transmission de données (11) vers un contrôleur (13) associé à l'unité d'actionnement hydraulique (3), l'au moins une caméra (8) en fonctionnement étant orientée sur l'au moins un repère de détection de position (9a, 9b, 9c) et le sol (5) de telle sorte qu'une inclinaison de l'outil porté (4) autour d'un axe transversal (19) peut être identifiée et l'unité d'actionnement hydraulique (3) comportant un mécanisme de levage (14) pour l'outil porté (4) et un vérin de biellette supérieure (18), l'unité d'interprétation (10) étant conçue pour analyser les données d'image de l'au moins une caméra (8) de sorte que la position de l'au moins un repère de détection de position (9a, 9b, 9c) puisse être déterminée univoquement et puisse être comparée avec des paramètres prédéfinis, l'unité d'interprétation (10) étant conçue pour identifier la hauteur (25) de l'outil porté (4),
**caractérisé en ce que**
l'unité d'interprétation (10) est conçue pour identifier l'inclinaison (26) de l'outil porté (4), comparer la hauteur (25) identifiée et l'inclinaison (26) identifiée avec une hauteur de référence ou une inclinaison de référence et activer l'unité d'actionnement hydraulique (3) lorsque la hauteur (25) identifiée et l'inclinaison (26) identifiée s'écartent de la hauteur de référence ou de l'inclinaison de référence.

2. Dispositif (1) selon la revendication 1, **caractérisé en ce qu'**au moins un repère de détection de position (9c) est disposé au niveau d'un bras de levier (29) qui peut être actionné par le vérin de biellette supérieure (18).

3. Dispositif (1) selon la revendication 1 ou 2, **caractérisé en ce que** l'unité d'actionnement hydraulique (3) est mise à contribution pour commander le vérin de biellette supérieure (18) et un vérin de mécanisme de levage (vérin de biellette inférieure 15).

4. Dispositif (1) selon l'une des revendications précédentes, **caractérisé en ce qu'**un capteur de pression est monté au niveau du raccord du vérin de biellette inférieure (15) ou dans le vérin de biellette inférieure (15) .

5. Dispositif (1) selon l'une des revendications précédentes, **caractérisé en ce qu'**un capteur d'inclinaison (30) ou un capteur inertiel se trouve en plus sur le véhicule (2), lequel est relié en transmission de données à l'unité d'interprétation (10).

6. Procédé pour faire fonctionner un véhicule (2) comprenant une unité d'actionnement hydraulique (3) destinée à réguler le fonctionnement d'un outil porté (4) sur le véhicule (2), le procédé comprenant au moins les étapes suivantes :
a) identification de la hauteur (25) de l'outil porté (4) ;
b) identification de l'inclinaison (26) de l'outil porté (4) ;
c) comparaison de la hauteur (25) identifiée et de l'inclinaison (26) identifiée avec une hauteur de référence ou une inclinaison de référence ;
d) activation de l'unité d'actionnement hydraulique (3) lorsque la hauteur (25) identifiée et l'inclinaison (26) identifiée s'écartent de la hauteur de référence ou de l'inclinaison de référence.

7. Procédé selon la revendication 6, **caractérisé en ce que** l'inclinaison du véhicule (2) est identifiée dans une étape supplémentaire b₁).

8. Procédé selon la revendication 6 ou 7, l'inclinaison de la surface du sol (5a) étant en plus identifiée avec un capteur d'inclinaison (30) ou un capteur inertiel présent sur le véhicule (2).

9. Procédé selon l'une des revendications 6 à 8, toutes les étapes a) à d) étant exécutées pendant le déplacement du véhicule (2).

10. Procédé selon l'une des revendications 6 à 9, la position du véhicule (2) étant identifiée avec un système GPS.

11. Procédé selon l'une des revendications 6 à 10, la caméra (8) étant également mise à contribution pour la détermination de la vitesse du véhicule (2).

12. Procédé selon l'une des revendications 6 à 11, la hauteur (25) et l'inclinaison (26) identifiées aux étapes a), b) et b₁) étant utilisées lorsqu'un paramètre d'application pouvant être prédéfini est respectivement atteint.

13. Procédé selon l'une des revendications 6 à 12, les hauteurs et inclinaisons attendues étant identifiées et fournies du côté d'une commande de véhicule (12).

14. Procédé selon l'une des revendications 6 à 13, au moins une position en hauteur (25) par rapport au sol, une inclinaison autour d'un axe transversal (19), une rotation autour d'un axe longitudinal ou une rotation autour d'un axe de hauteur étant identifiées.
